# EUROPÄISCHE PATENTSCHRIFT

(11) **EP 2 126 327 B1**
(45) Veröffentlichungstag und Bekanntmachung des Hinweises auf die Patenterteilung: **09.12.2015**
(21) Anmeldenummer: 08706750.0
(22) Anmeldetag: 15.01.2008
(51) Int. Cl.: F02M 31/13

(54) **VORRICHTUNG ZUR ERZEUGUNG EINES TEMPERATURGRADIENTEN**
DEVICE FOR PRODUCING A TEMPERATURE GRADIENT
DISPOSITIF DE GÉNÉRATION DE GRADIENTS DE TEMPÉRATURE

(30) Priorität: 19.01.2007 DE 102007003794
(43) Veröffentlichungstag der Anmeldung: 02.12.2009
(73) Patentinhaber: BorgWarner Ludwigsburg GmbH, 71636 Ludwigsburg (DE)
(72) Erfinder: ELLER, Martin, 71642 Ludwigsburg (DE); GEIGER, Steffen, 71679 Asperg (DE); BERDEL, Erich, 71679 Asperg (DE); WULFF, Nikolaus, 71636 Ludwigsburg (DE); LAST, Bernd, 71762 Reutlingen (DE); FROMM, Gerald, 88489 Wain (DE); BRICHZIN, Volker, 71634 Ludwigsburg (DE)
(74) Vertreter: Twelmeier Mommer & Partner
(86) Internationale Anmeldenummer: PCT/DE2008/000053
(87) Internationale Veröffentlichungsnummer: WO 2008/086779

(56) Entgegenhaltungen:
- EP-A- 1 571 325
- DE-B3- 10 257 921
- US-A- 5 992 399
- US-A- 6 040 557
- US-A1- 2002 096 155

## Beschreibung

Die Erfindung betrifft eine Vorrichtung zum Erzeugen eines Temperaturgradienten mit den im Oberbegriff des Anspruchs 1 angegebenen Merkmalen. Eine derartige Vorrichtung ist beispielsweise aus der US 2002/096155 A1, EP 1 571 325 A1, US 6,040,557, DE 102 57 921 B3 oder der US 5,992,399 bekannt.

### Stand der Technik

Vorrichtungen zur Erzeugung eines Temperaturgradienten sind bekannt. Bei Vorrichtungen nach dem bekannten Stand der Technik kommt es häufig zu Verschleißerscheinungen in der Vorrichtung, die die Funktion beeinträchtigen oder zum Ausfall der Vorrichtung führen können. Derartige Verschleißerscheinungen entstehen insbesondere durch Relativbewegungen zwischen den Einzelteilen der Vorrichtung, die in erster Linie dann auftreten, wenn die Vorrichtung unter nichtstatischen Bedingungen zum Einsatz kommt.

### Aufgabenstellung

Die der Erfindung zugrunde liegende Aufgabe besteht daher darin, eine Vorrichtung der eingangs genannten Art zu schaffen, welche sicher betrieben werden kann und darüber hinaus leicht zu montieren ist. Am Stand der Technik hat sich gezeigt, dass räumliche Freiheitsgrade des ohmschen Widerstands zu Abrieb und Verschleißerscheinungen in der Vorrichtung führen und es zu Beeinträchtigungen der Funktion oder zu Ausfallen kommen kann. Diese sollen durch den erfindungsgemäßen Aufbau der Vorrichtung vermieden werden. Bei einer mäanderartigen Ausführung des ohmschen Widerstandes wird dies beispielsweise dadurch erreicht, dass dieser vor dem Einbau In die Vorrichtung eine über die Winkel α und β gestreckte Form aufweist und dadurch bei dem Einbau In die Vorrichtung eine Vorspannkraft erzeugt wird, wodurch die Bewegungsfreiräume der Einzelteile erheblich eingeschränkt und Verschleißerscheinungen minimiert werden.

Eine weitere Bestimmung der Erfindung liegt darin, eine vereinfachte und sichere Herstellung und/oder Montage der erfindungsgemäßen Vorrichtung zu ermöglichen. Diese Aufgabe wird gemäß der Erfindung dadurch gelost, dass spezielle Montagehilfselemente an den Einzelteilen der Vorrichtung zur Verfügung gestellt werden.

Die erfindungsgemäßen Montagehilfselemente, die sowohl an dem mindestens einem Gehäuse als auch an den mindestens zwei nichtleitenden Isolatoren ausgebildet sein können, können gleichzeitig derart ausgestaltet sein, dass die Freiheitsgrade der Einzelteile der Vorrichtung eingeschränkt und somit Verschleißerscheinungen zusätzlich minimiert bzw. verhindert werden.

Im Folgenden werden besonders vorteilhafte Ausführungsformen bzw. Weiterbildungen der erfindungsgemäßen Vorrichtung anhand der beigefügten Zeichnungen beschrieben.

### Ausführungsbeispiele

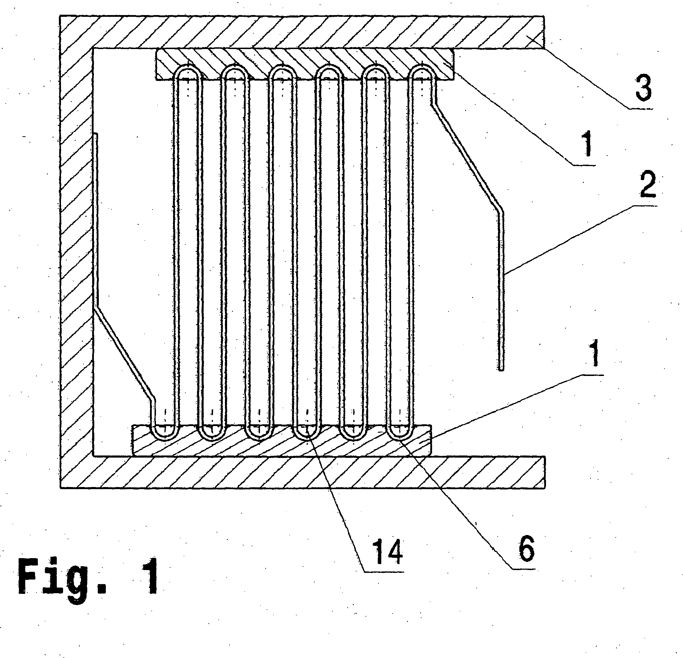

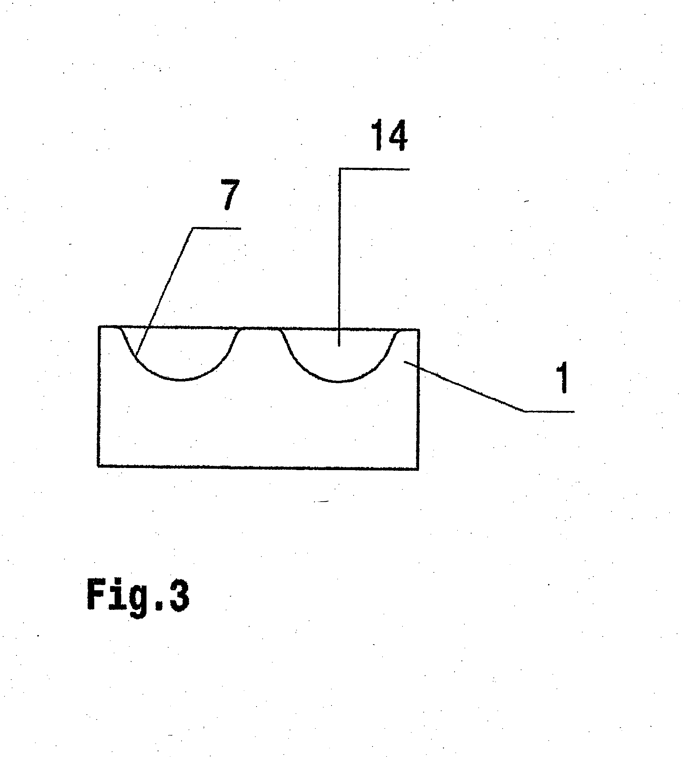

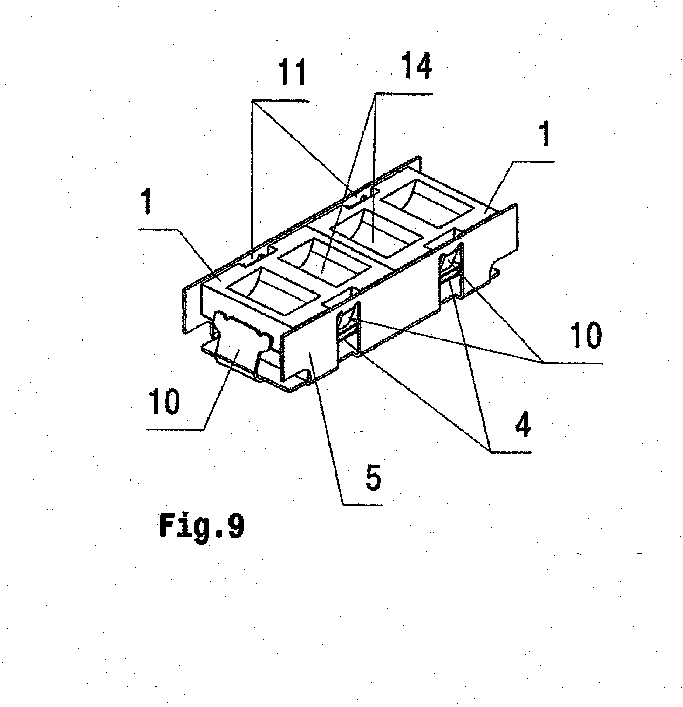

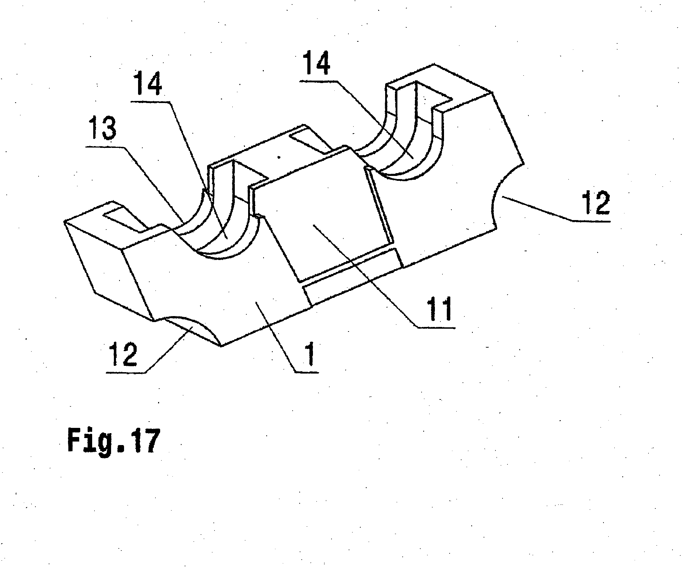

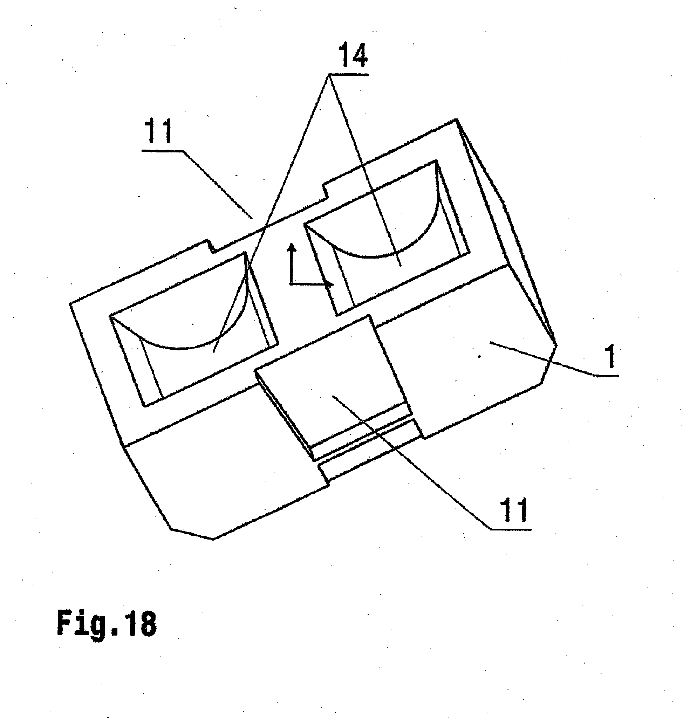

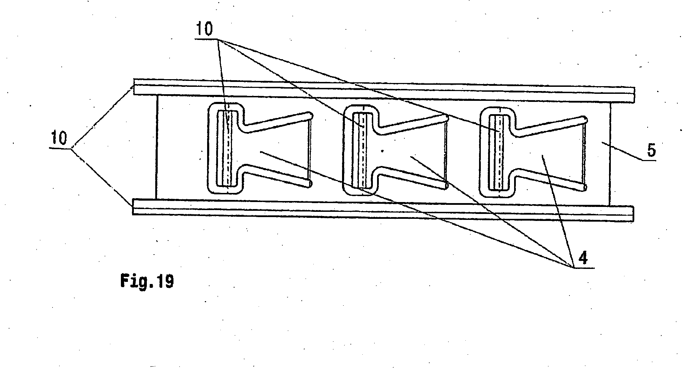

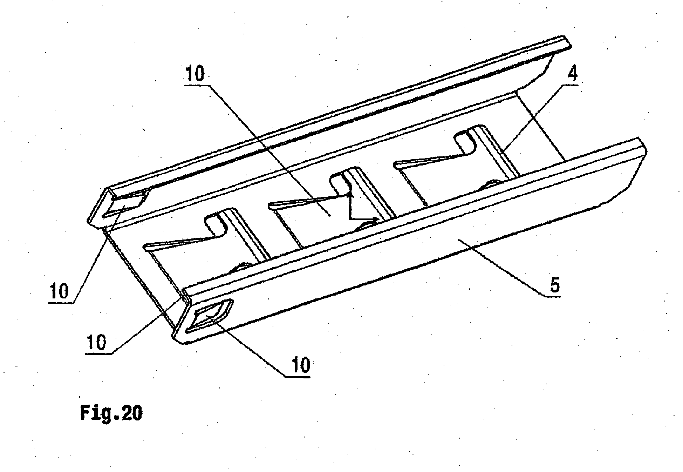

Der in Figur 1 gezeigte Heizer, insbesondere zur Luftvorwärmung, insbesondere im Ansaugtrakt von Kraftmaschinen, weist ein Gehäuse 3 auf. Das Heizband 2 des Heizers ist mäanderförmig in zwei Isolatoren 1 verschiebungssicher in der Weise angeordnet, dass der Mäanderumkehrpunkt des Heizbandes 2 in der Aufnahme 14 des Isolators 1 anliegt. Ein derartiger Heizer wird hergestellt, in dem ein oder mehrere Isolatoren, wie sie beispielsweise in den Figuren 17 oder 18 dargestellt sind, in das Gehäuse 5, das in den Figuren 19 und 20 gezeigt wird, seitlich eingeschoben werden, so dass der oder die Isolatoren 1 von den Montagehilfselementen( seitlich und nach oben) in Verbindung mit den elastischen Elementen 4, die in Figur 19 bzw. 20 an der Gehäuseunterseite mit den Montagehilfselementen identisch sind, an einem unbeabsichtigten Herausfallen gehindert werden. In einer alternativen Ausgestaltung werden die Isolatoren 1 aus den Figuren 3, 5,17 bzw. 18 in ein Gehäuse 5, wie es in den Figuren 9, 10,11, 12, 13, 14,15 und 16 dargestellt ist und nachdem eine oder mehrere Federn 4 an die dafür vorgesehene Stelle, z.B. Hilfselement 10, eingelegt bzw. montiert wurde, von der Oberseite des Gehäuses 5 in das Gehäuse 5 eingelegt bzw. mit Hilfe der korrespondierenden Hilfselemente 10, 11 eingerastet. In zwei derart erzeugte Isolatorelemente mit zugehörigem Gehäuse 5 wird nun ein mäanderförmig gebogener ohmscher Widerstand 2 eingesteckt, wie dies in den Figuren 1,2, 4, 7 und 8 zu sehen ist. Diese Einheit, bestehend aus ohmschen Widerstand 2 und Isolator 1 samt Gehäuse 5 wird in ein Gehäuse 3 eingesteckt und anschließend mit der nicht dargestellten Elektroinstallation verbunden.

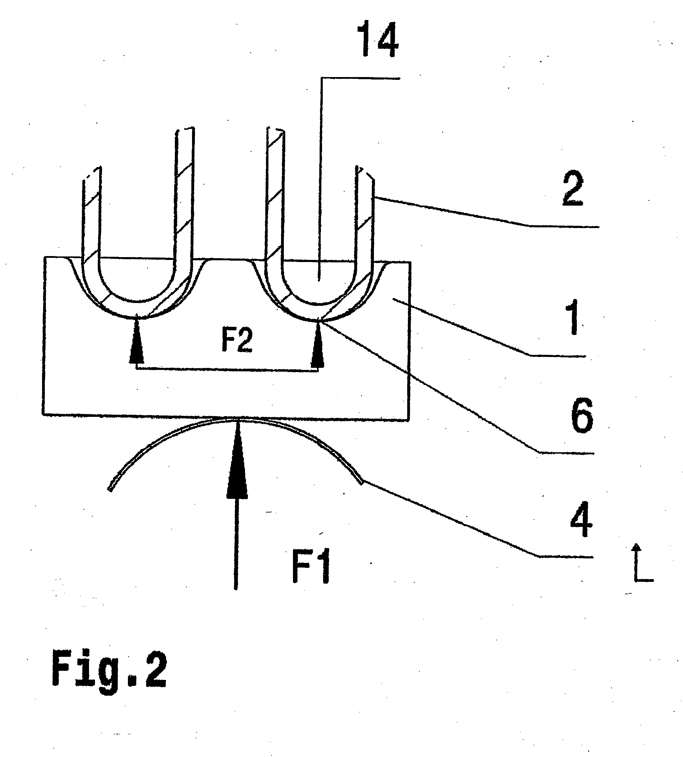

Figur 2 stellt einen nicht leitenden Isolator 1 dar. Der Isolator 1 weist zwei Aufnahmen 14 auf, die die Mäanderumkehrpunkte 6 des ohmschen Leiters 2 aufnehmen. Die Aufnahme 14 ist annähernd halbkreisförmig ausgebildet. An den Auflageflächen im Radius 7, wie in Figur 3 gezeigt, zwischen Heizband 2 und Isolator 1 wirken die Teilkräfte F2, die aus der Kraft F1 des elastischen Elementes 4 resultieren. Das Heizband 2 liegt im Bereich der Pfeile F2 an der Keramik des Isolators 1 in der Aufnahme 14.

In Figur 3 wird ein nicht leitender Isolator 1 gezeigt. Der Isolator 1 weist zwei Aufnahmen 14 auf, die die Mäanderumkehrpunkte 6 des ohmschen Leiters 2, wie in Figur 2, 4 und 8 dargestellt, aufnehmen. Die Aufnahme 14 ist im wesentlichen halbkreisförmig ausgestaltet.

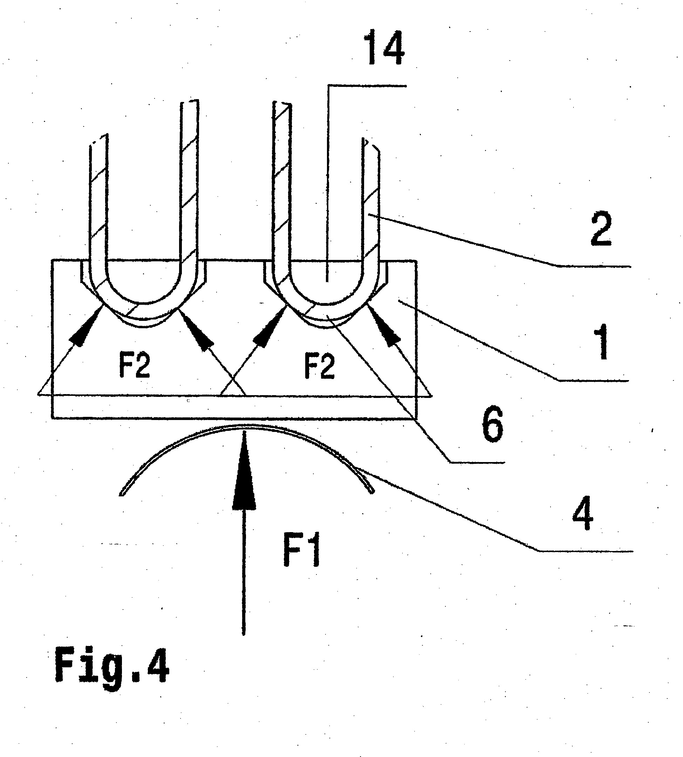

Figur 4 stellt einen nicht leitenden Isolator 1 dar. Der Isolator 1 weist zwei Aufnahmen 14 auf, die die Mäanderumkehrpunkte 6 des ohmschen Leiters 2 aufnehmen. Die Aufnahme 14 weist zwei Schrägen auf, die den Winkel γ bilden. Der Winkel y liegt vorzugsweise im Bereich zwischen 30° und 90°. An den Schrägen wirken die Teilkräfte F2, die aus der Kraft F1 des elastischen Elementes 4 resultieren. Das Heizband 2 liegt zweimal, sichtbar im Bereich der Pfeile F2 an der Keramik des Isolators 1 in der Aufnahme 14 an den Schenkeln des Winkel γ.

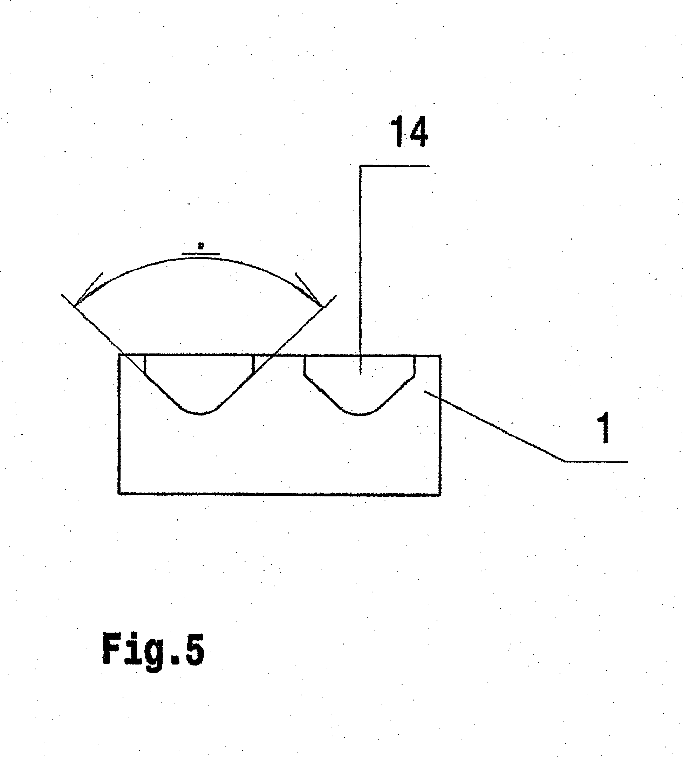

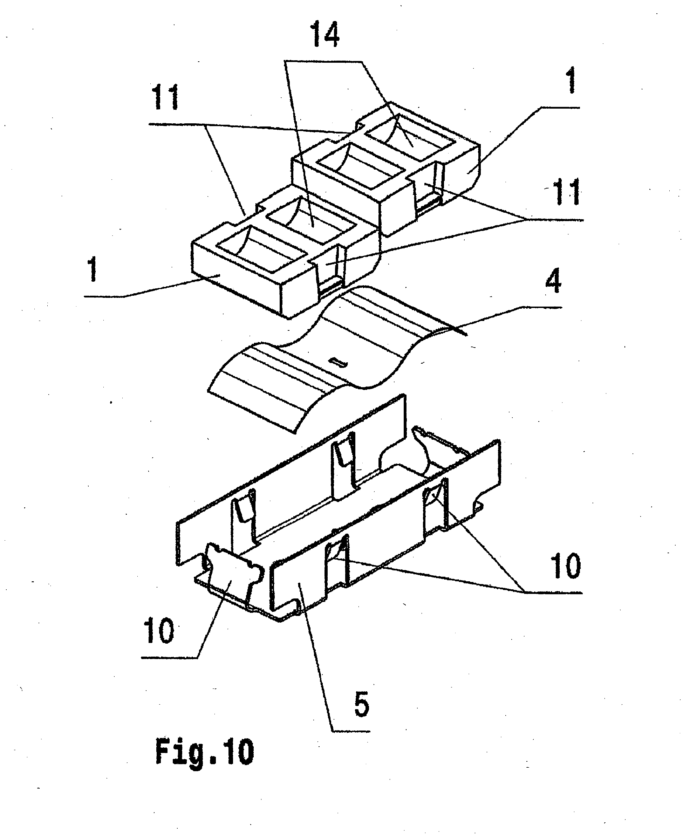

In Figur 5 wird ein nicht leitender Isolator 1 gezeigt, der wie in Figur 18 zu sehen ist, an seiner Vorderseite ein Montagehilfselement 11 aufweist. Auf seiner Rückseite befindet sich ebenfalls ein Montagehilfselement 11. Die Montagehilfselemente 11 korrespondieren mit den Montagehilfselementen 10 des Isolatorgehäuses, wie dies in den Figuren 10 bis 16 dargestellt wird. Der Isolator 1 weist zwei Aufnahmen 14 auf, die die Mäanderumkehrpunkte 6 des ohmschen Leiters 2, wie in Figur 2, 4 und 8 dargestellt, aufnehmen. Die Aufnahme 14 weist zwei Schrägen auf, die den Winkel γ bilden. Der Winkel γ liegt vorzugsweise im Bereich zwischen 30° und 90°.

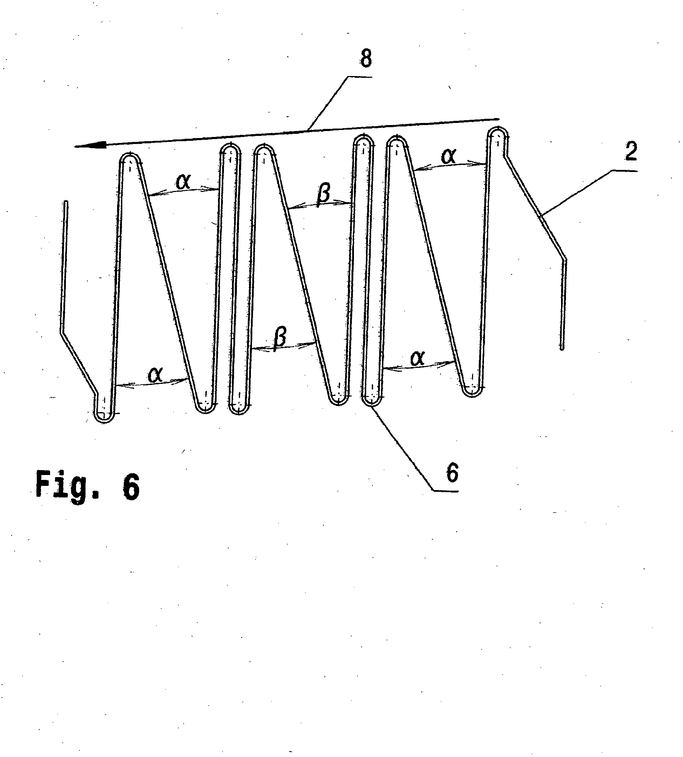

In Figur 6 wird ein ohmscher Widerstand 2 gezeigt, der ausgehend von einem Flachstahl in der dargestellten Weise mäanderförmig umgeformt bzw. gebogen wird. Die definierte Anordnung der Winkel α und β und das anschließende Zusammendrücken des Heizbandes 2 in der eingezeichneten Richtung 8 führt zu einer im Heizband 2 erzeugten Vorspannung und der gewünschten Verkantung im Isolator 1, was schematisch durch die horizontalen Kraftpfeile angedeutet wird und vorteilhafterweise in Figur 1 im montierten Zustand zu sehen ist.

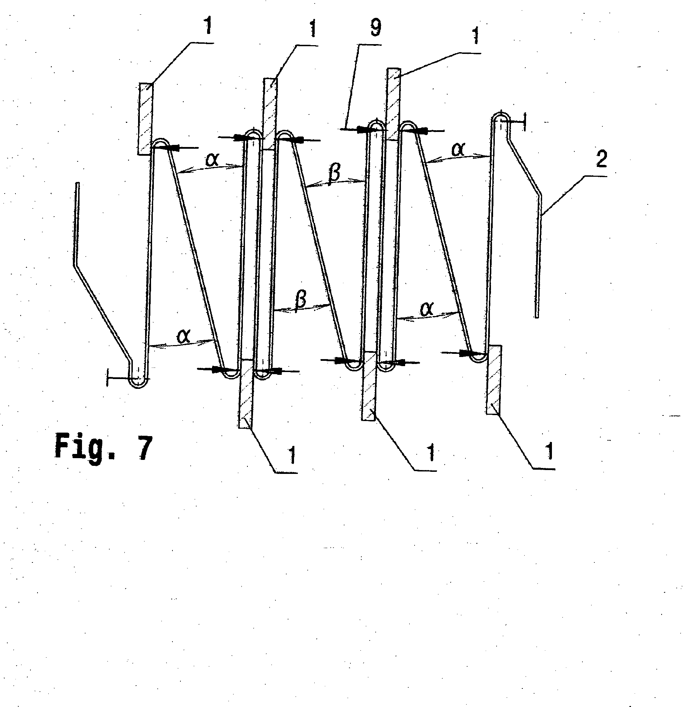

Figur 7 zeigt eine Darstellung der Kräfte am eingespannten ohmschen Widerstand 2, der hier als sogenanntes Heizband Verwendung findet.

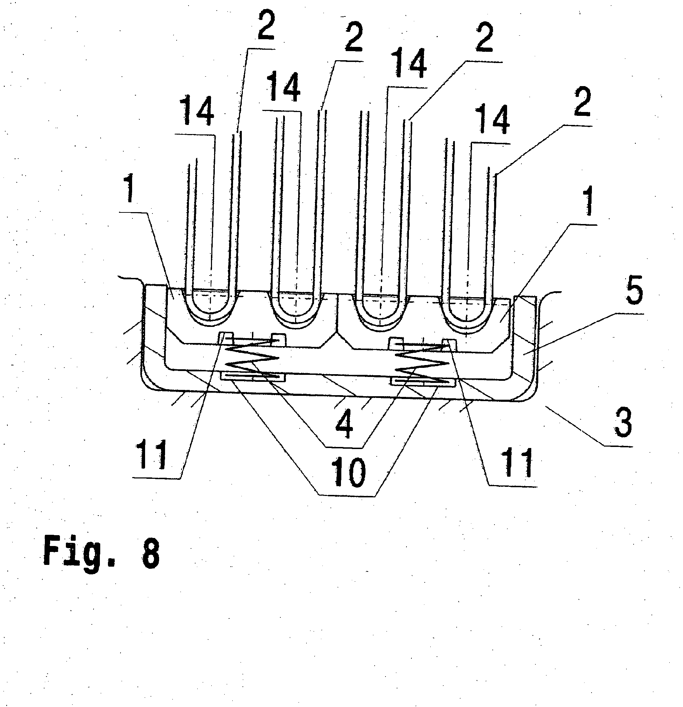

In Figur 8 werden zwei nicht leitende Isolatoren 1 dargestellt. Zwei Montagehilfselemente 11 sind an den Unterseiten der Isolatoren 1 angeordnet, was in Figur 8 im Schnitt dargestellt wird, die Feder 4 ist zwischen Montagehiffsetement 10, welches entweder männlich oder weiblich ausgestaltet sein kann und Montagehilfselement 11 angeordnet. Die Montagehilfselemente 11 korrespondieren mit den Montagehilfselementen 10 des

Isolatorgehäuses 5. Der Isolator 1 weist zwei Aufnähmen 14 auf, die die Mäanderumkehrpunkte 6 des ohmschen Leiters 2 aufnehmen.

In Figur 9 werden zwei nicht leitende Isolatoren 1 dargestellt, die an ihrer Vorderseite je ein Montagehilfselement 11 aufweisen. Auf ihrer Rückseite befindet sich ebenfalls je ein Montagehilfselement 11.Die Feder 4 ist zwischen den Isolatoren 1 und dem Gehäuse 5 angeordnet. Die Montagehilfselemente 11 korrespondieren mit den Montagehilfselementen 10 des Isolatorgehäuses 5.

Der Isolator 1 weist zwei Aufnahmen 14 auf, die die Mäanderumkehrpunkte 6 des ohmschen Leiters 2, wie in Figur 2, 4 und 8 dargestellt, aufnehmen.

In Figur 10 werden zwei nicht leitende Isolatoren 1 gezeigt, die an ihrer Vorderseite je ein Montagehilfselement 11 aufweisen. Auf ihrer Rückseite befindet sich ebenfalls je ein Montagehilfselement 11. Die Feder 4 , die in diesem Ausführungsbeispiel als Feder ausgeführt ist, ist zwischen den Isolatoren 1 und dem Gehäuse 5 angeordnet angeordnet. Die Montagehilfselemente 11 korrespondieren mit den Montagehilfselementen 10 des Isolatorgehäuses 5. Der Isolator 1 weist zwei Aufnahmen 14 auf, die die Mäanderumkehrpunkte 6 des ohmschen Leiters 2, wie in Figur 2, 4 und 8 dargestellt, aufnehmen.

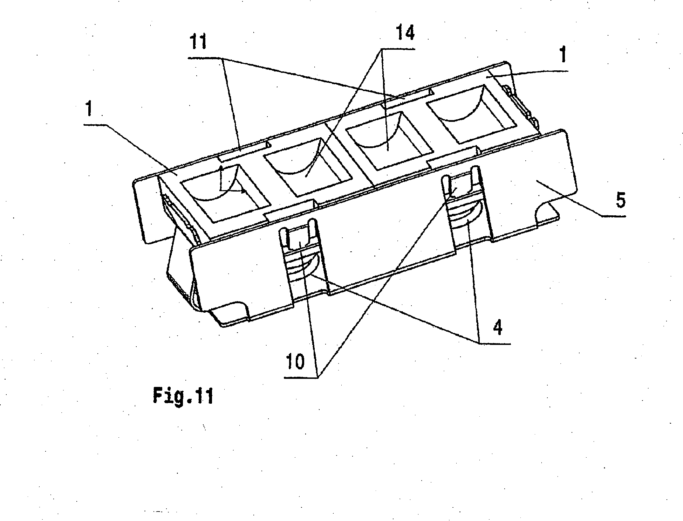

In Figur 11 werden zwei nicht leitende Isolatoren 1 dargestellt, die an ihrer Vorderseite je ein Montagehilfselement 11 aufweisen. Auf ihrer Rückseite befindet sich ebenfalls je ein Montagehilfselement 11. Zwei weitere Montagehilfselemente 11 sind an den Unterseiten der Isolatoren 1 und somit hier nicht sichtbar angeordnet, was in Figur 8 im Schnitt dargestellt wird, die Feder 4 ist zwischen Montagehilfselement 10, welches entweder männlich oder weiblich ausgestaltet sein kann, und Montagehilfselement 11 angeordnet. Die Montagehilfselemente 11 korrespondieren mit den Montagehilfselementen 10 des Isolatorgehäuses 5. Der Isolator 1 weist zwei Aufnahmen 14 auf, die die Mäanderumkehrpunkte 6 des ohmschen Leiters 2, wie in Figur 2, 4 und 8 dargestellt, aufnehmen.

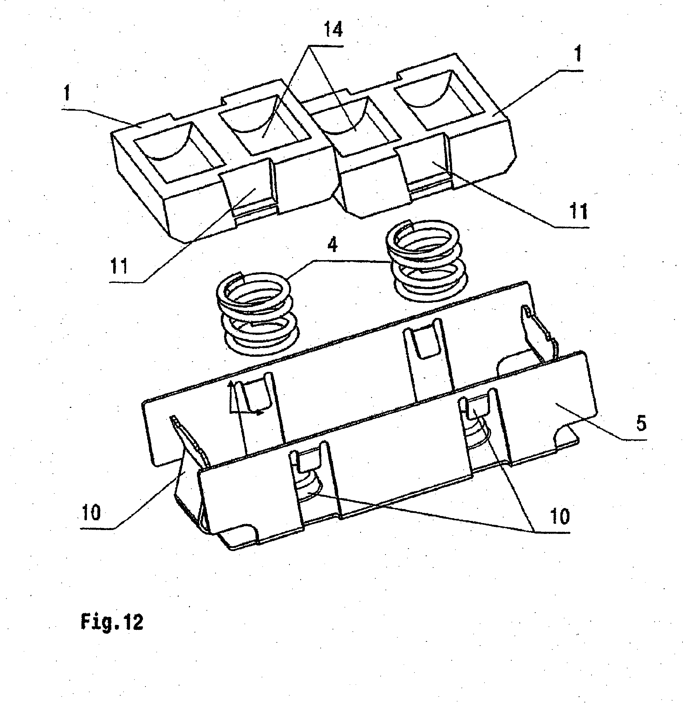

In Figur 12 werden zwei nicht leitende Isolatoren 1 gezeigt, die an ihrer Vorderseite je ein Montagehilfselement 11 aufweisen. Auf ihrer Rückseite befindet sich ebenfalls je ein Montagehilfselement 11. Zwei weitere Montagehilfselemente 11 sind an den Unterseiten der Isolatoren 1 und somit hier nicht sichtbar angeordnet, was in Figur 8 im Schnitt dargestellt wird, die Feder 4 ist zwischen Montagehilfselement 10 und Montagehilfselement 11 angeordnet. Die Montagehilfselemente 11 korrespondieren mit den Montagehilfselementen 10 des Isolatorgehäuses 5. Der Isolator 1 weist zwei Aufnahmen 14 auf, die die Mäanderumkehrpunkte 6 des ohmschen Leiters 2, wie in Figur 2, 4 und 8 dargestellt, aufnehmen.

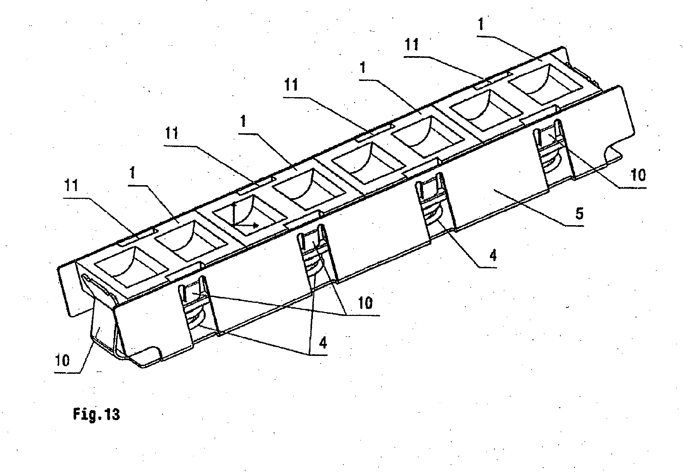

In Figur 13 werden vier nicht leitende Isolatoren 1 dargestellt, die an ihrer Vorderseite je ein Montagehilfselement 11 aufweisen. Auf ihrer Rückseite befindet sich ebenfalls je ein Montagehilfselement 11.Vier weitere Montagehilfselemente 11 sind an den Unterseiten der Isolatoren 1 und somit hier nicht sichtbar angeordnet, was in Figur 8 im Schnitt dargestellt wird, die Feder 4 ist zwischen Montagehilfselement 10, weiches entweder männlich oder weiblich ausgestaltet sein kann und Montagehilfselement 11 angeordnet. Die Montagehilfselemente 11 korrespondieren mit den Montagehilfselementen 10 des Isolatorgehäuses 5. Der Isolator 1 weist zwei Aufnahmen 14 auf, die die Mäanderumkehrpunkte 6 des ohmschen Leiters 2, wie in Figur 2, 4 und 8 dargestellt, aufnehmen.. An den kurzen Seiten des Gehäuses 5 befindet sich je ein Montagehilfselement 10, die die Isolatoren 1 elastisch fixieren.

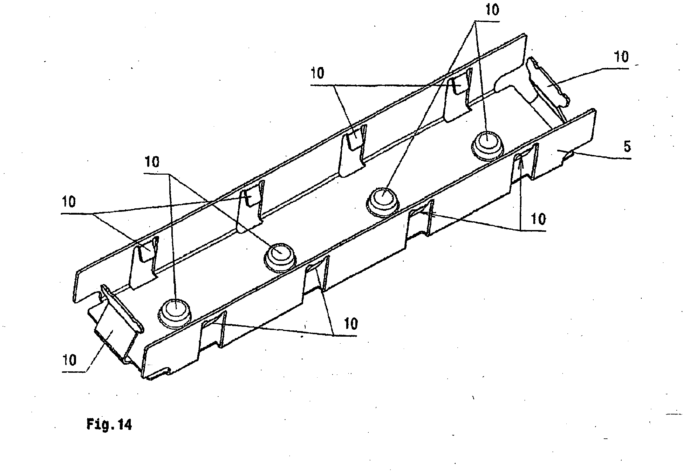

Figur 14 stellt das Isolatorgehäuse 5 dar, wobei an der Bodeninnenseite des Gehäuses 5 vier topfförmige Erhebungen 10 zur Aufnahme der Federn 4 aus Figur 8 angeordnet sind. An der Vorder- und an der Rückseite des Gehäuses 5 sind je vier Montagehilfselemente 10 angeordnet, die jeweils mit den Montagehilfselementen 11 des Isolators 1 aus Figur 13 korrespondieren. An den kurzen Seiten des Gehäuses 5 befindet sich je ein Montagehilfselement 10, die die Isolatoren 1 elastisch fixieren.

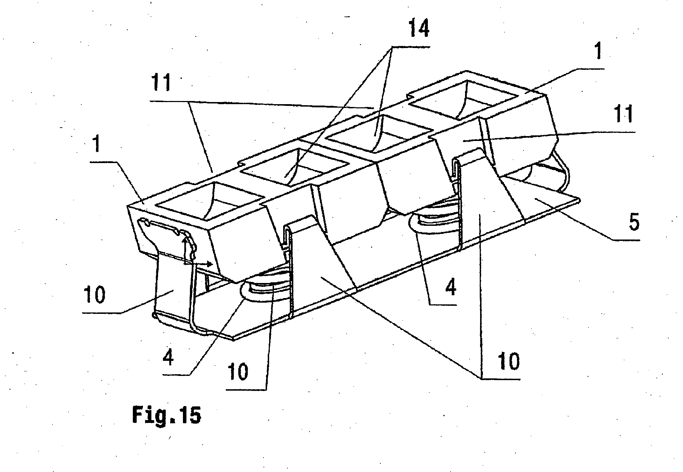

In Figur 15 werden zwei nicht leitende Isolatoren 1 dargestellt, die an ihrer Vorderseite je ein Montagehilfselement 11 aufweisen. Auf ihrer Rückseite befindet sich ebenfalls je ein Montagehilfselement 11. Zwei weitere Montagehilfselemente 11 sind an den Unterseiten der Isolatoren 1 und somit hier nicht sichtbar angeordnet, was in Figur 8 im Schnitt dargestellt wird, die Feder 4 ist zwischen Montagehilfselement 10, welches entweder männlich oder weiblich ausgestaltet sein kann, und Montagehilfselement 11 angeordnet. Die Montagehilfselemente 11 korrespondieren mit den Montagehilfselemeriten 10 des Isolatörgehäuses 5. Der Isolator 1 weist zwei Aufnahmen 14 auf, die die Mäanderumkehrpunkte 6 des ohmschen Leiters 2, wie in Figur 2, 4 und 8 dargestellt, aufnehmen.

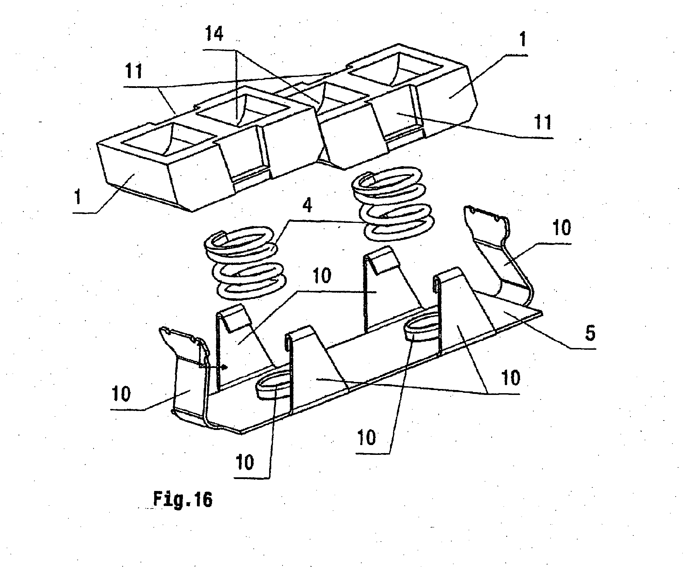

In Figur 16 werden zwei nicht leitende Isolatoren 1 gezeigt, die an ihrer Vorderseite je ein Montagehilfselement 11 aufweisen. Auf ihrer Rückseite befindet sich ebenfalls je ein Montagehilfselement 11. Zwei weitere Montagehilfselemente 11 sind an den Unterseiten der Isolatoren 1 und somit hier nicht sichtbar angeordnet, was aber in Figur 8 im Schnitt dargestellt wird, die Feder 4 ist zwischen Montagehilfselement 10 und Montagehilfselement 11 angeordnet. Die Montagehilfselemente 11 korrespondieren mit den Montagehilfselementen 10 des Isolatorgehäuses 5. Der Isolator 1 weist zwei Aufnahmen 14 auf, die die Mäanderumkehrpunkte 6 des ohmschen Leiters 2, wie in Figur 2, 4 und 8 dargestellt, aufnehmen.

Figur 17 zeigt einen nicht leitender Isolator 1, der an seiner Vorderseite ein Montagehilfselement 11 aufweist. Auf seiner Rückseite befindet sich ebenfalls ein Montagehilfselement 11, das. Die Montagehilfselemente 11 korrespondieren mit den Montagehilfselementen 10 des Isolatorgehäuses, wie dies in den Figuren 10 bis 16 dargestellt wird. Der Isolator 1 weist zwei Aufnahmen 14 auf, die die Mäanderumkehrpunkte 6 des ohmschen Leiters 2, wie in Figur 2, 4 und 8 dargestellt, aufnehmen. Der. Isolator 1 weist vier Aussparung 13 zur Kühlung des Leiters 2 und zwei Aussparungen 12 zur Kühlung der Feder 4 auf.

In Figur 18 wird ein nicht leitender Isolator 1 gezeigt, der an seiner Vorderseite ein Montagehilfselement 11 aufweist. Auf seiner Rückseite befindet sich ebenfalls ein Montagehilfselement 11. Die Montagehilfselemente 11 korrespondieren mit den Montagehilfselementen 10 des Isolatorgehäuses, wie dies in den Figuren 10 bis 16 dargestellt wird. Der Isolator 1 weist zwei Aufnahmen 14 auf, die die Mäanderumkehrpunkte 6 des ohmschen Leiters 2, wie in Figur 2, 4 und 8 dargestellt, aufnehmen.

Figur 19 stellt ein Gehäuse 5 dar, das aus einem Blech erzeugt wurde und das die Montagehilfselemente 10 aufweist, die aus dem selben Blech ausgestanzt sind, angeordnet, um mit den entsprechenden Montagehilfselementen des Isolators zu korrespondieren. In dieser Ausführungsform wird an der Vorder- und an der Rückseite des Gehäuses 5 ein Teil der jeweiligen Seite etwa rechtwinklig nach innen gebogen, um ein Montagehilfselement 10 zu erhalten, das die mögliche Bewegung des Isolators in Richtung der Oberseite des Gehäuses 5 verhindert. Besonders vorteilhaft ist die kombinierte Ausgestaltung von Montagehilfselement 10 und Feder 4 in einem Element, einstückig realisiert im Gehäuse 5.

In Figur 20 wird ein Gehäuse 5 gezeigt, das einstückig aus Blech erzeugt wurde und das die Montagehilfselemente 10 aufweist, die aus dem selben Blech ausgestanzt sind, angeordnet, um mit den entsprechenden Montagehilfselementen des Isolators zu korrespondieren. In dieser Ausführungsform wird an der Vorder- und an der Rückseite des Gehäuses 5 ein Teil der jeweiligen Seite etwa rechtwinklig nach innen gebogen, um ein Montagehilfselement 10 zu erhalten, das die mögliche Bewegung des isolators in Richtung der Oberseite des Gehäuses 5 verhindert. Besonders vorteilhaft ist die kombinierte Ausgestaltung von Montagehilfselement 10 und Feder 4 in einem Element, einstückig realisiert im Gehäuse 5.

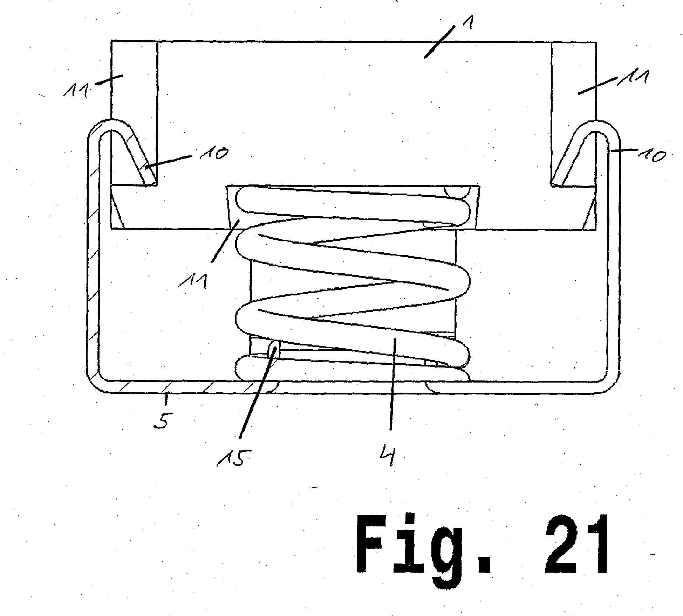

In Figur 21 wird ein nicht leitender Isolator 1 gezeigt, der an seiner Vorderseite ein Montagehilfselement 11 aufweist. Auf seiner Rückseite befindet sich ebenfalls ein Montagehilfselement 11. Ein weitere Montagehilfselement 11 ist an der Unterseite des Isolators 1 angeordnet, was z.B. in Figur 8 im Schnitt dargestellt wird. Die Feder 4 ist zwischen dem Dom 15, der als Zentrierung der Feder 4 vorgesehen ist und Montagehilfselement 11 angeordnet. Der Dom 15 ist vercrimpt, so dass er die Feder 4 zur besseren Montage fixieren kann. Die Montagehilfselemente 11 korrespondieren mit den Montagehilfselementen 10 des Isolatorgehäuses 5. Die Montagehilfselemente 10 wirken als federnde Klips, die den Isolator 1 gefedert vorgespannt fixieren, nachdem sie bei der Montage des Isolators 1 von oben eine Seitwärtsbewegung nach außen ausführen mussten, um abschließend in die Montagehilfselemente 11 einzurasten, wie es in Figur 21 gezeigt wird. Der Isolator 1 weist Aufnahmen 14 auf, die hier nicht explizit dargestellt sind und die die Mäanderumkehrpunkte 6 des ohmschen Leiters 2, wie in Figur 2, 4 und 8 dargestellt, aufnehmen.

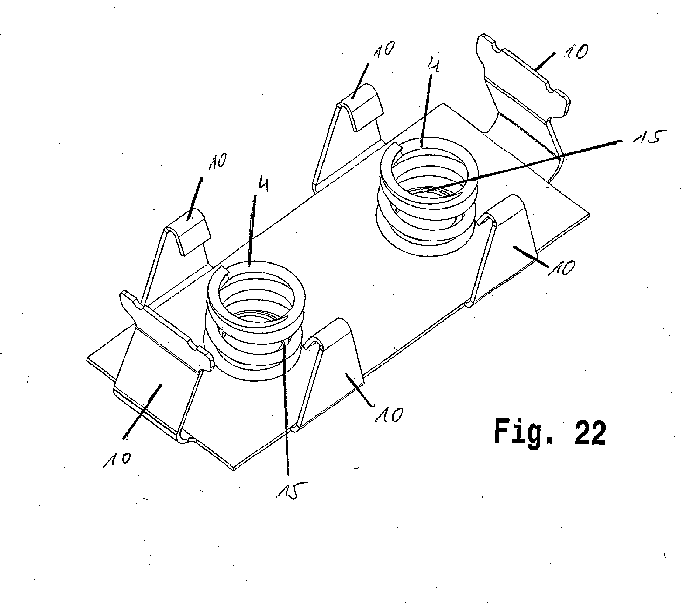

Figur 22 zeigt eine Draufsicht auf die Vorrichtung nach Figur 21 ohne den nichtleitenden Isolator 1. Zu sehen sind die Montagehilfselemente 10 am Isolatorgehäuse 5, das an seiner Unterseite zwei gecrimpte Dome 15 aufweist, die die Federn 4 sowohl zentrieren als auch bei der Montage fixieren.

### Bezugszeichenliste

- 1: nichtleitender Isolator
- 2: ohmscher Widerstand
- 3: Gehäuse
- 4: elastisches Element
- 5: Isolatorgehäuse
- 6: Mäanderumkehrpunkt
- 7: Radius
- 8: Richtungsangabe Zusammendrücken Montage
- 9: Vorspannkraft
- 10: Monatgehilfselement Isolatorgehäuse
- 11: Montagehilfslement Isolator
- 12: Aussparung
- 13: Aussparung
- 14: Aufnahme
- 15: Dom zur Federzentrierung

## Patentansprüche

1. Vorrichtung zur Erzeugung eines Temperaturgradienten, insbesondere in gasförmigen Medien, umfassend
wenigstens einen meanderförmigen ohmschen Widerstand (2),
wenigstens zwei gegenüberliegende Isolatoren (1), die Aufnahmen (14) für die Meanderumkehrpunkte des Widerstands (2) aufweisen,
wenigstens ein Gehäuse (3), und wenigstens ein elastisches Element (4), das zwischen einem der Isolatoren und dem Gehäuse angeordnet ist, **dadurch gekennzeichnet, dass** bei wenigstens einem der Isolatoren (1) die Aufnahmen (14) zwei Schrägen aufweisen die einen Winkel bilden.

2. Vorrichtung nach Anspruch 1, **dadurch gekennzeichnet, dass** die Schrägen einen Winkel zwischen 30° und 60° bilden.

3. Vorrichtung nach einem der vorstehenden Ansprüche, **dadurch gekennzeichnet, dass** die Isolatoren (1) an ihren Längsseiten Ausnehmungen als Montagehilfselemente (11) ausfweisen, die mit passenden Montagehilfselementen (10) eines Isolatorgehäuses (5) korrespondieren.

## Claims

1. Device for creating a temperature gradient, especially in gaseous media, comprising
at least one meander shaped ohmic resistor (2),
at least two opposing insulators (1) having receptacles (14) for the meander turning points of the resistor (2),
at least one casing (3) and at least one elastic element (4) positioned between one of the insulator and the casing, **characterized in that** in at least one of the insulators (1) the receptacles (14) comprise two slants that form an angle..

2. Device according to Claim 1, **characterized in that** the slants form an angle between 30° and 60°.

3. Device according to any one of the preceding claims, **characterized in that** the insulators (1) have at their lateral sides recesses as assembly aid elements (11) corresponding to matching assembly aid elements (10) of an insulator casing (5).

## Revendications

1. Dispositif pour la génération de gradients de température, notamment dans des milieux sous forme gazeuse, comprenant
au moins une résistance (2) ohmique en forme de méandres,
au moins deux isolateurs (1) situés à l'opposé l'un de l'autre, qui présentent des logements (14) pour les points d'inversion des méandres de la résistance (2),
au moins un boîtier (3), et au moins un élément élastique (4) qui est disposé entre l'un des isolateurs et le boîtier, **caractérisé en ce que** dans au moins l'un des isolateurs (1), les logements (14) présentent deux inclinaisons qui forment un angle.

2. Dispositif selon la revendication 1, **caractérisé en ce que** les inclinaisons forment un angle entre 30 ° et 60 °.

3. Dispositif selon l'une des revendications précédentes, **caractérisé en ce que** les isolateurs (1) présentent, sur leurs côtés longitudinaux, des évidements servant d'éléments d'aide au montage (11) qui correspondent avec des éléments d'aide au montage (10) complémentaires d'un boîtier d'isolateur (5).
